# EUROPEAN PATENT SPECIFICATION

(11) **EP 4 394 479 B1**
(45) Date of publication and mention of the grant of the patent: **05.08.2026**
(21) Application number: 22217079.7
(22) Date of filing: 29.12.2022
(51) Int. Cl.: G02B 26/08

(54) **MICROMIRROR DEVICE AND METHOD OPERATING SAME**
MIKROSPIEGELVORRICHTUNG UND BETRIEBSVERFAHREN DAFÜR
DISPOSITIF À MICRO-MIROIRS ET PROCÉDÉ DE FONCTIONNEMENT D'UN DISPOSITIF À MICRO-MIROIRS

(43) Date of publication of application: 03.07.2024
(73) Proprietor: Silicon Austria Labs GmbH, 8010 Graz (AT)
(72) Inventor: Sasaki, Takashi, 9500 Villach (AT); Piot, Adrien, 9500 Villach (AT); Pribosek, Jaka, 9500 Villach (AT); Moridi, Mohssen, 9500 Villach (AT)
(74) Representative: Wirnsberger & Lerchbaum Patentanwälte OG

(56) References cited:
- EP-A1- 2 924 485
- EP-A2- 1 361 470
- EP-A2- 2 157 467
- WO-A2-2009/007447
- US-A1- 2004 125 472
- US-A1- 2020 285 045

## Description

The invention concerns a micromirror device comprising a mirror, which is mounted controllably pivotable about a rotation axis.

Furthermore, the invention concerns a method of operating a micromirror device, wherein the micromirror device comprises a mirror which is mounted controllably pivotable about a rotation axis.

Moreover, the invention concerns a method for manufacturing a micromirror device.

Microprojectors and micromechanical scanner mirrors are known from the prior art. These are usually classified as micro-opto-electro-mechanical systems (MOEMS). Microprojectors or microscanners usually comprise a mirror pivotable about an axis and an actuator system to pivot the mirror with the actuator system about the axis. In this way, for example, a controlled deflection of a laser beam incident on the mirror is made possible. Usually, a deformation of the mirror caused due to the pivoting of the mirror, typically referred to as dynamic deformation of the mirror, is an inherent problem. The dynamic deformation of the mirror typically causes a broadening of a laser beam reflected by the mirror. This usually results in conflicting performance parameters such as a mirror size, a maximum mirror deflection angle, a mechanical deformability, and/or a slewing frequency of the mirror. Typically, a tradeoff needs to be made between the performance parameters. A performance limit is often set by a material fracture of the mirror.

In order to overcome the aforementioned difficulties, it has become known to reinforce a rear side of the mirror. However, this is usually associated with an increase in a mass moment of inertia of the mirror. It has also been tried to manufacture the mirror with coordinated combinations of different materials in order to increase a robustness of the mirror, which is usually associated with a complex manufacturing process. It has also been known to increase a robustness of the mirror system by optimizing a suspension system of the mirror. This is usually associated with a complicated manufacturing process and an increase in a mass moment of inertia of the mirror.

It is an object of the invention to provide a micromirror device, which has an improved operational capability.

It is a further object of the invention to provide a method of operating a micromirror device which provides improved operational capability. Furthermore, it is an object of the invention to provide a method of manufacturing a micromirror device which has an improved operational capability.

To achieve the foregoing objects, the invention provides a micromirror device comprising a mirror, which mirror is mounted controllably pivotable about a rotation axis, wherein the mirror comprises a dynamic deformation compensator, which is formed with at least one actuator for elastic deformation of the mirror in order to at least partially, preferably completely, compensate a dynamic deformation of the mirror with control of the actuator.

The invention is based on the idea to actively compensate at least partially, preferably completely, a dynamic deformation of the mirror occurring during operation of the micromirror device, preferably in such a way that the mirror, in particular a reflection surface of the mirror, remains flat during a pivoting of the mirror. By actively compensating for the deformation of the mirror, an increase in the mass moment of inertia of the mirror can be avoided to a large extent. Thus, a negative influence of a reflected, in particular electromagnetic, radiation caused by the reflection at the mirror can be kept small and/or aforementioned performance parameters can be improved, in particular simultaneously. This enables a large operational capability of the micromirror device.

Usually, the dynamic deformation compensator comprises at least one, in particular one or more, actuators, wherein the actuators are usually designed to elastically deform the mirror. Typically, with control of the at least one actuator, the mirror can be controllably elastically deformed, in particular such that dynamic deformation of the mirror is at least partially, preferably completely, compensated. This applies in particular during operation of the micromirror device while the mirror is pivoting about the rotation axis. The pivoting of the mirror about the rotation axis can be controlled, in particular regulated, usually with an electronic control system, which can be part of the micromirror device. With, especially by, controlling the actuators, a dynamic deformation of the mirror can be compensated at least partially, especially completely.

The dynamic deformation of the mirror, usually refers to an elastic deformation of the mirror, which occurs during a pivoting of the mirror, usually about the rotation axis, caused by the pivoting. The mirror is typically supported such that pivoting of the mirror from a rest position of the mirror is associated with a restoring force. The pivoting of the mirror about the rotation axis is usually a periodic pivoting motion, in particular with alternating opposite directions of rotation about the rotation axis.

Usually, the respective actuator defines a deformation region of the mirror, wherein the deformation region is controllably elastically deformable with, especially by, the actuator, in particular with application of a control signal to the actuator. Typically, the respective actuator of the dynamic deformation compensator defines a deformation region of the mirror, wherein the deformation region is time-variably elastically deformable with the actuator with, especially by, application of a time-varying control signal to the actuator. Thus, with control of the actuator, dynamic deformation of the mirror can be compensated at least partially, preferably completely. This usually occurs during operation of the micromirror device while the mirror is pivoting about the rotation axis. The time-varying control signal is usually a time-varying electrical control signal, in particular a time-varying electrical control voltage. A time-varying control signal typically relates to one or more period durations of a pivoting motion of the mirror about the rotation axis. The dynamic deformation compensator may comprise a plurality of such actuators. The time-varying elastic deformation of the respective deformation region preferably occurs such that a tensile stress and a compressive stress are generated alternately, in particular periodically, in the deformation region. This usually corresponds to the time-varying control signal with which the actuator of the deformation region is controlled.

Usually, the mirror has a reflection surface which is designed to reflect a majority, in particular substantially all, of a radiation, in particular electromagnetic radiation, incident on the reflection surface. The radiation can be a light beam and/or a laser beam. The mirror is usually formed as a micromirror. The mirror usually comprises a mirror basis, which is in particular plate-shaped, on which the reflection surface is arranged, in particular applied. Preferably, the reflection surface is oriented substantially parallel to the rotation axis. The reflection surface may have a reflectance of more than 90%, in particular more than 95%, preferably more than 99%, in particular with respect to the aforementioned radiation. Usually, the reflection surface of the mirror is flat, in particular optically flat, in a non-pivoting state of the mirror, in particular around the rotation axis. The respective deformation region may be formed as part of the mirror basis. The reflection surface and the respective deformation region may be arranged above each other in a direction orthogonal to the reflection surface. The mirror basis can be formed with, in particular predominantly of, silicon. Top view of the reflection surface usually refers to a view orthogonal to the reflection surface of the mirror, in particular against the reflection surface. The mirror can have a diameter between 10 µm and 10 mm, often between 10 µm and 8 mm. Typically, the mirror, in particular the reflection surface, can have a diameter between 10 µm and 1.5 mm, in particular between 50 µm and 1 mm, preferably between 100 µm and 800 µm, more preferably between 200 µm and 500 µm. This applies in particular in top view of the reflection surface of the mirror. Generally, the mirror has a thickness between 1 µm and 250 µm, in particular between 5 µm and 100 µm, preferably between 10 µm and 50 µm. The thickness is usually measured orthogonal to the reflection surface.

A practicable implementation can be achieved if the actuator is a piezoelectric actuator. This makes it possible to achieve that a mass moment of inertia of the mirror is influenced only slightly, in particular negligibly. The piezoelectric actuator can be formed with, in particular as, a piezoelectric element in order to elastically deform the deformation region of the actuator with the piezoelectric element, in particular by deformation, of the piezoelectric element. By controlling the actuator, in particular with application of a control signal, usually an electrical control voltage, to the piezoelectric element of the actuator, the respective deformation region can be elastically deformed, in particular elastically bent, with the piezoelectric element. The piezoelectric actuator, in particular the piezoelectric element, typically has two electrical electrodes and a piezoelectric material arranged between the electrical electrodes, so that an electrical control signal applied to the electrical electrodes, which is usually an electrical control voltage, corresponds to an elastic deformation, in particular elastic bending, of the piezoelectric material. The deformation region is usually formed with, in particular by, the piezoelectric element, in particular its piezoelectric material. The electric electrodes and the piezoelectric material of the piezoelectric actuator are usually arranged above each other in an arrangement direction orthogonal to the reflection surface of the mirror. A shape of the deformation region in a top view of the reflection surface and/or in the arrangement direction usually refers to an area in which the electrodes and the piezoelectric material of the piezoelectric actuator overlap each other. To control the respective piezoelectric actuator, the control signal is usually applied to the electric electrodes of the piezoelectric actuator. The electrical electrodes and/or the piezoelectric material are usually formed in layers, in particular as thin films. The respective layer is usually oriented substantially parallel to the reflection surface of the mirror and/or orthogonal to the direction of arrangement. This applies in particular to a length and a width of the layer. The height of the layer is usually smaller than a length and smaller than a width of the layer. The length, the width and the height are usually oriented orthogonally to each other. The piezoelectric material can be formed with or from, for example, lead zirconate titanate (PZT) or aluminum nitride (AIN). The deformation region, for example, the piezoelectric element of the piezoelectric actuator, is typically disposed between a mirror basis substrate, as described below, and the reflection surface of the mirror.

The dynamic deformation compensator can comprise a plurality of actuators, wherein, in top view of the reflection surface, both partial segments of the mirror defined by the rotation axis each comprise at least one deformation region of the actuators. In top view of the reflection surface, the rotation axis usually extends through the mirror, in particular the reflection surface. One of the partial segments may be denoted as the first partial segment, and the other of the partial segments may be denoted as the second partial segment. The at least one deformation region of the first partial segment and the at least one deformation region of the second partial segment are typically defined by different actuators. Usually, each deformation region is defined by its own actuator. Actuators assigned to different subsegments are usually controlled with control signals that differ from one another, for example with different amplitude and/or different phase. Preferably, the different control signals have the same amplitude and a different phase.

Preferably for accurate control, in top view of the reflection surface, at least one deformation region of the first partial segment and at least one deformation region of the second partial segment are arranged and/or shaped symmetrically, in particular mirror-symmetrically, relative to each other with respect to the rotation axis. This applies in particular if the mirror, in particular the reflection surface, is symmetrically shaped in top view of the reflection surface. Preferably, this applies to several, in particular substantially all, deformation regions of the respective partial segment. The deformation regions are usually deformation regions of actuators of the dynamic deformation compensator.

The respective actuator is typically electrically connected to one or more electrical control lines of the micromirror device to apply the control signals to the actuators via the electrical lines. The actuators of deformation regions of the same partial segment can be controlled with an identical, in particular with a common, control signal. For this, the actuators of deformation region of the respective partial segment can be electrically connected to the same electrical control lines. The actuators of deformation regions of different partial segments can usually be controlled with different control signals. For this, the actuators of deformation regions of different of the partial segments can be electrically connected with different electrical control lines. This applies in particular to actuators of the dynamic deformation compensator.

Actuators of the dynamic deformation compensator, whose deformation regions are formed with different partial segments, can be controlled with a phase shift relative to each other. In particular, the micromirror device is designed for a corresponding control. The phase shift is usually between 160° and 200°, in particular between 175° and 185°, preferably 180°. Usually, the partial segments exhibit periodic dynamic deformations that are shifted in time relative to one another, in particular by about 180°. In this way, the dynamic deformation can be efficiently reduced. The phase shift refers in particular to the time-varying control signal with which the actuators can be controlled. The time-varying control signal is usually sinusoidal.

It is advantageous if, in top view of the reflection surface of the mirror, an area occupancy of the respective partial segment with the at least one deformation region decreases in an alignment direction of the respective partial segment, which alignment direction faces away from the rotation axis and is oriented orthogonally to the rotation axis, in particular along an extension of the deformation region. If the respective partial segment has several deformation regions, this applies in particular to the area occupancy of the respective partial segment with several deformation regions. This corresponds to a decreasing moment usually caused by the dynamic deformation in this direction. It has been shown that, usually, a moment caused by the dynamic deformation decreases according to a cubic function. It is therefore preferable if the surface occupancy decreases according to a cubic function. Thereby, the deformation regions usually refer to actuators of the dynamic deformation compensator. The alignment direction of the first partial segment and the alignment direction of the second partial segment are usually oriented opposite to each other.

An efficient implementation is achievable if, in top view of the reflection surface of the mirror, the at least one deformation region of the respective partial segment has a shape formed with a plurality of tines, wherein the tines are arranged in a row in a direction parallel to the rotation axis and the tines each are tapered in a respective alignment direction of the partial segment. Usually, the alignment direction faces away from the rotation axis and is oriented orthogonally to the rotation axis. Thus, a usual dynamic deformation can be efficiently reduced. The at least one deformation region of the respective partial segment may be formed with a plurality of deformation regions of the respective partial segment, wherein the deformation regions are usually defined by different actuators. Preferably, a respective width of a plurality, in particular a majority, of the tines decreases along the alignment direction, preferably according to a cubic function. The width of the respective tine is usually measured orthogonally to the alignment direction. In this way, a moment caused by the dynamic deformation can be efficiently reduced. Generally, the deformation regions and/or actuators refer to actuators of the dynamic deformation compensator. Preferably, the tines form a row in a direction parallel to the rotation axis which row extends over a predominant length, preferably substantially an entire length, of the mirror. In top view of the reflection surface, the shape of the at least one deformation region may have a tine basis, which is usually stripshaped, from which the tines project in the direction of the alignment direction. The tine basis, in particular the longitudinal extent thereof, may extend in a direction parallel to the direction of rotation over a predominant length, preferably substantially the entire length, of the mirror. The shape of the at least one deformation region of the respective partial segment can be implemented with a piezoelectric actuator in that the piezoelectric element, in particular its piezoelectric material, has a shape corresponding to the shape of the deformation region in a view along the respective arrangement direction.

A mirror basis substrate of the mirror basis may be formed with at least one layer, in particular a layer arrangement. The layer arrangement may be formed with a plurality of layers arranged on each other, usually in a direction orthogonal to the reflection surface. The respective layer may be formed with, in particular substantially of, silicon, silicon dioxide and/or silicon nitride. In particular, at least one of the layers may be formed with, in particular substantially of, silicon dioxide and silicon nitride. Preferably, one of the layers is formed with, in particular substantially of, silicon and another of the layers is formed with, in particular substantially of, silicon dioxide. The layer arrangement may be formed with at least three layers, wherein preferably one layer formed with, in particular substantially of, silicon and one layer formed with, in particular substantially of, silicon dioxide and/or silicon nitride are alternately arranged on one another.

The above explanations apply in particular to actuators and/or deformation regions of the dynamic deformation compensator. Frequently, the mirror, typically caused by a construction of the mirror with several layers arranged on each other, exhibits mechanical stresses in the mirror, as a result of which the mirror, can exhibit static deformation. This can negatively influence a reflection of the radiation with the mirror. It has been found that it is favorable if the mirror comprises a static deformation compensator, wherein the static deformation compensator comprises at least one actuator which defines a deformation region of the mirror, wherein the deformation region is statically elastically deformable with the actuator with, especially by application of a time-constant control signal to the actuator. Thus, a static elastic deformation of the mirror can be compensated at least partially, in particular completely. The actuator is preferably a piezoelectric actuator. The time-constant control signal is then typically a time-constant electrical control voltage. The aforementioned explanations in this document regarding the implementation of an, in particular piezoelectric, actuator and/or deformation region can apply in an analogous manner to the static deformation compensator, in particular the actuator of the static deformation compensator, wherein the static deformation compensator, in particular its actuator, is designed for static elastic deformation of the deformation region. This also applies to the application of a control signal to the actuator, in particular via electrical control lines. Static deformation usually refers to a deformation that is constant over time. The time-constant control signal is usually a time-constant electrical control signal, in particular a time-constant electrical control voltage. Static and/or time-constant usually refer to a period of one or more period durations of a pivoting motion of the mirror about the rotation axis. This applies in particular to the static deformation and/or the time-constant control signal.

The static deformation compensator can have several actuators, each of which defines a deformation region of the mirror, in particular of the first partial segment or the second partial segment. One or more actuators of the static deformation compensator can define deformation regions of the two partial segments. Actuators of the static deformation compensator that define deformation regions of different sub-segments may be controllable with different time-constant control signals.

It is preferable for precise control if, in top view of the reflection surface, actuators of the static deformation compensator define one or more deformation regions of the respective subsegment, which deformation regions of the subsegments are arranged and/or shaped symmetrically with respect to the rotation axis, in particular mirror-symmetrically. This applies in particular if the mirror, in particular the reflection surface, is symmetrically shaped in top view of the reflection surface. Preferably, this applies to essentially all deformation regions of the static deformation compensator of the respective partial segment. Deformation regions of the static deformation compensator usually denote deformation regions defined by one or more actuators of the static deformation compensator. This applies analogously to deformation regions of the dynamic deformation compensator. The actuators of the static deformation compensator that define deformation regions of the same partial segment can be controlled with the same, in particular a common, control signal. The actuators of the static deformation compensator, that define deformation regions of different partial segments, can be controlled with different control signals.

In top view of the reflection surface of the mirror, the at least one deformation region of the static deformation compensator can be formed with portions of the mirror which do not overlap with deformation regions of the dynamic deformation compensator. This can apply to several, in particular all, deformation regions of the static deformation compensator. Preferably, the deformation regions of the dynamic deformation compensator and deformation regions of the static deformation compensator are arranged in a same arrangement plane in the mirror. The arrangement plane is usually oriented substantially parallel to the reflection surface of the mirror. In top view of the reflection surface of the mirror, the at least one deformation region of the static deformation compensator can be arranged between the at least one deformation region of the dynamic deformation compensator of one of the partial segments and the at least one deformation region of the dynamic deformation compensator of the other partial segment. The at least one deformation region of the static deformation compensator can be formed with both partial segments. Preferably, in top view of the reflection surface, a substantially entire area of the mirror which is not occupied by deformation regions of the dynamic deformation compensator is occupied by the at least one, in particular several, deformation regions of the static deformation compensator.

High efficiency can be achieved if one or more, preferably all, piezoelectric actuators, in particular their piezoelectric elements, are designed as a multilayer arrangement, with several piezoelectric layers of the actuator being arranged between two electrical electrodes of the respective piezoelectric actuator, wherein between each two adjacent piezoelectric layers a further electrical electrode is arranged. The multilayer arrangement then typically forms the deformation region of the piezoelectric actuator. The electrical electrodes and the piezoelectric layers of the piezoelectric actuator are usually arranged above each other in an arrangement direction orthogonal to the reflection surface of the mirror. This can apply to actuators of the dynamic deformation compensator and/or actuators of the static deformation compensator.

Usually at least one, in particular a plurality, preferably all, of the actuators and/or deformation regions are arranged between the mirror basis substrate and the reflection surface of the mirror. This can apply to the dynamic deformation compensator and/or to the static deformation compensator.

The mirror can have several dynamic and/or several static deformation compensators, which are arranged one above the other in a direction orthogonal to the reflection surface of the mirror, in particular overlapping each other. Preferably, the respective deformation compensators arranged one above the other have identical structures and identical shapes. This applies in particular to deformation regions of dynamic deformation compensators arranged one above the other, in particular overlapping each other, and/or to deformation regions of static deformation compensators arranged one above the other, in particular overlapping each other.

Usually, the micromirror device comprises a holder, wherein the mirror is connected to the holder pivotally about the rotation axis. The mirror and the holder may be connected to each other by one or more torsion elements of the micromirror device, wherein the torsion element or elements define the rotation axis. Typically, one end of each torsion element is disposed on the mirror and the other end of the torsion element is disposed on the holder, usually rigidly. The respective torsion element usually forms a torsion spring. The micromirror device usually has a drive system which is designed to pivot the mirror in a controlled manner, in particular in a regulated manner, about the rotation axis. The drive system can be formed with one or more bending beams that can be set into mechanical vibration in a controllable manner, whereby the bending beams are usually connected to the mounting in a vibration-transmitting manner in order to pivot the mirror by means of the mechanical vibration. The drive system can be controlled, in particular regulated, by the electronic control system.

The actuators can be electrically connected to electrical control lines of the micromirror device in order to control the actuators with control signals via the electrical control lines. Generally, different actuators are connected to different electrical control lines to control the actuators with different control signals. This can apply to actuators of the dynamic and/or static deformation compensator.

The actuators, in particular their electrical electrodes, can be electrically connected to an electronic control unit, wherein the electronic control unit is designed to apply control signals, in particular electrical control voltages, to the actuators, in particular in a controlled, preferably regulated manner. Usually, the electronic control unit can be designed to apply a time-varying control signal to the respective actuator of the dynamic deformation compensator and/or to apply a time-constant control signal to the respective actuator of the static deformation compensator. The electronic control unit may include a microprocessor for controlling the actuators. The electronic control unit and the actuators may be electrically connected to each other via the electrical control lines. The electronic control unit may be the electronic control system. The electronic control unit can be part of the micromirror device.

The micromirror device, in particular the mirror, is usually a MEMS device, wherein MEMS usually refers to microelectromechanical systems. The micromirror device can be designed as part of a projector or scanner in order to direct electromagnetic radiation, in particular laser radiation, for example implemented with light, in a controlled, preferably regulated manner by reflection of the electromagnetic radiation at the mirror, in particular at a reflection surface of the mirror, with controlled pivoting of the mirror.

Furthermore, the invention concerns a method of operating a micromirror device, in particular a micromirror device as described in this document, wherein the micromirror device comprises a mirror which is mounted controllably pivotable about a rotation axis, wherein the mirror comprises a dynamic deformation compensator which is formed with at least one actuator for elastic deformation of the mirror, wherein the mirror is pivoted controllably about the rotation axis and with control of the actuator a dynamic deformation of the mirror is compensated at least partially, preferably entirely. By an active at least partial compensation of the dynamic deformation of the mirror with the dynamic deformation compensator, a negative influence of a reflected, especially electromagnetic, radiation caused by the reflection at the mirror can be kept small and/or the performance parameters mentioned above can be improved, especially simultaneously. This enables a high operational capability of the micromirror device. The mirror may be pivoted about the rotation axis in a controlled manner, in particular in a regulated manner.

The method of operating a micromirror device can be designed analogously to the features and effects described in the context of a micromirror device, in particular above, in this document. The same applies analogously to the micromirror device with respect to the method of operating a micromirror device.

In a top view of a reflection surface of the mirror, both partial segments of the mirror defined by the rotation axis may each comprise at least one deformation region, wherein the deformation regions of the different partial segments are defined by different actuators of the dynamic deformation compensator, wherein with application of a time-varying control signal to the respective actuator the deformation regions are time-varyingly elastically deformed. Preferably, an actuator defining a deformation region of one of the partial segments and an actuator defining a deformation region of the other partial segment are controlled with time-varying control signals, which have a, usually temporal, phase shift with respect to each other. The phase shift is usually between 160° and 200°, in particular between 175° and 185°, preferably 180°. This preferably applies to several, in particular all, actuators of the dynamic deformation compensator of the respective partial segment. In this way, dynamic deformation of the different partial segments can be reduced in a practicable manner. The time-varying control signal is usually applied to the respective actuator. This can be carried out with an, in particular, aforementioned electronic control unit.

The time-varying control signals usually each have a sinusoidal shape. A frequency of the time-varying control signals is preferably substantially equal to a frequency of a pivotal movement of the mirror about the rotation axis. The respective time-varying control signal usually has a periodic maximum value or a periodic minimum value which substantially corresponds in time to a maximum deflection of a periodic pivoting movement of the mirror. The control unit can be designed to apply corresponding control signals to the actuators.

Dynamic deformation can be reduced particularly efficiently if the control signal applied to the actuator of the dynamic deformation compensator is formed with a time-constant bias control signal and time-varying dynamic control signal, which dynamic control signal is superimposed on the bias control signal. With the time-constant bias control signal, a static deformation of the mirror can be reduced, at least partially, in particular completely. With the time-varying dynamic control signal, a dynamic deformation of the mirror can be reduced, at least partially, in particular completely. Expediently, such control signals can be applied to several, in particular all, of the actuators of the dynamic deformation compensator. To several, in particular all, actuators of the dynamic deformation compensator, control signals can be applied which have an identical time-constant bias control signal. The dynamic control signal can be implemented as described for the time-varying control signal.

Furthermore, the invention concerns a method of manufacturing a micromirror device, in particular a micromirror device described in this document, wherein computer-simulated or materially a mirror element is provided which is mounted controllably pivotable about a rotation axis, wherein the mirror element is pivoted about the rotation axis and in a pivoted state, preferably at a maximum deflection of the mirror element, a mechanical stress is determined along a surface of the mirror element, whereafter locations of the mirror element exhibiting a mechanical stress greater than a predetermined threshold stress value are defined as deformation region locations in order to manufacture a micromirror device, in particular a micromirror device as described in this document, wherein the deformation region defined by the at least one actuator of the dynamic deformation compensator of the mirror of the micromirror device is formed corresponding to the deformation region locations. Specifically, the micromirror device is manufactured accordingly. The method of manufacturing a micromirror device can be designed analogously to the features and effects described in the context of a micromirror device or a method of operating a micromirror device, in particular above, in this document. The same applies analogously to the micromirror device or the method of operating a micromirror device with respect to the method of manufacturing a micromirror device.

For manufacturing the micromirror device, a mirror may be manufactured with a dynamic deformation compensator, wherein the dynamic deformation compensator comprises at least one actuator, wherein the actuator defines a deformation region of the mirror corresponding to the deformation region locations. The mirror is usually manufactured analogously to the mirror element, in particular with the same size and/or shape.

The mirror element may be implemented as described in this document for the mirror. A micromirror device, comprising the mirror element, may be provided computersimulated or provided materially. If the mirror element or the micromirror device is provided computersimulated, the method of manufacturing the micromirror device may be a computer-implemented method.

The above explanations on actuators and deformation regions can apply to the dynamic deformation compensator and/or the static deformation compensator, in particular their actuators and deformation regions, unless explicitly stated otherwise. Document US 2004/125472 A1 is relevant to the present invention.

The invention will now be described by way of example with reference to the accompanying drawings, in which:
Fig. 1 schematically shows a micromirror device comprising a mirror with dynamic deformation in a side view of the mirror;
Fig. 2 schematically shows a further micromirror device, comprising a mirror, in a perspective view, wherein a shape of deformation regions of the mirror defined with actuators is shown;
Fig. 3 schematically shows the mirror of Fig. 2 in a top view of a reflection surface of the mirror;
Fig. 4 schematically shows the mirror of the micromirror device of Fig. 2 and Fig. 3 in a cross-sectional view;
Fig. 5 to Fig. 10 show a deformation of the mirror of the micromirror device of Fig. 2 to

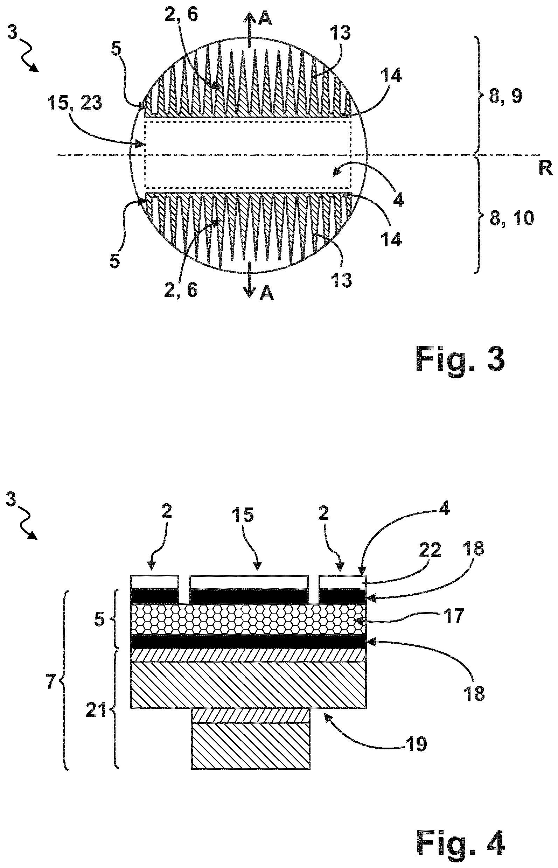

Fig. 4 at different electrical control voltages applied to the dynamic deformation compensator.

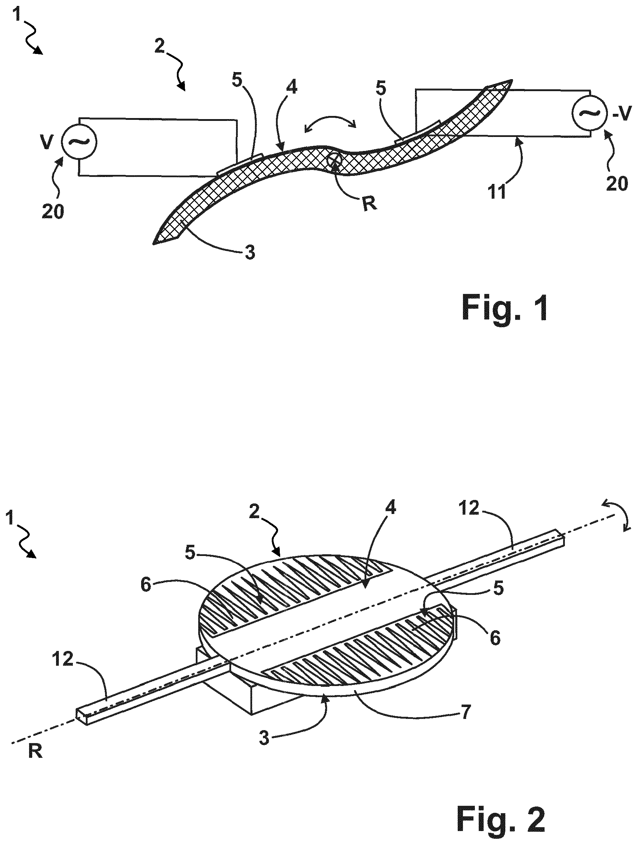

Fig. 1 shows a schematic illustration of a micromirror device 1, which comprises a mirror 3 that is mounted controllably pivotable about a rotation axis R, in a view along the rotation axis R. The mirror 3 has a reflection surface 4 to deflect radiation incident on the reflection surface 4 in a controlled manner by pivoting the mirror 3, in particular the reflection surface 4. The reflection surface 4 is oriented substantially parallel to the rotation axis R. The rotation axis R passes through the mirror 3. The reflection surface 4 is substantially flat in a non-moving state of the mirror 3. In Fig. 1 is shown condition in which the mirror 3 pivots. Due to the pivoting of the mirror 3 about the rotation axis R, the mirror 3, in particular the reflection surface 4, exhibits dynamic elastic deformation. The mirror 3 has a dynamic deformation compensator 2 formed with a plurality of actuators 5 to compensate the dynamic deformation of the mirror 3 at least partially, preferably completely, by controlling the actuators 5. The actuators 5 of the dynamic deformation compensator 2 are implemented as piezoelectric actuators 5, wherein the respective actuator 5 defines a deformation region 6 of the mirror 3, wherein with application of a time-varying electrical control signal, which is implemented as a time-varying electrical control voltage, to the respective actuator 5, the deformation region 6 is elastically deformed in a time-varying manner. The respective actuator 5 is formed as a piezoelectric element, wherein the piezoelectric element, in particular a piezoelectric material of the piezoelectric element, represents the respective deformation region 6. The piezoelectric actuators 5 may be arranged on a surface of the mirror 3 and/or within the mirror 3. The reflection surface 4 is usually arranged on a mirror basis 7 of the mirror 3. The actuators 5 can be part of the mirror basis 7.

In top view of the reflection surface 4, the rotation axis R usually defines two partial segments 8 of the mirror 3, usually referred to as the first partial segment 9 and the second partial segment 10. Each of the partial segments 8 comprises at least one actuator 5 of the dynamic deformation compensator 2 and correspondingly at least one deformation region 6. The micromirror device 1 is designed such that the actuators 5 of the dynamic deformation compensator 2 of the different partial segments 8 can be controlled with a phase shift, preferably of 180°, with respect to each other. For this purpose, a first time-varying electrical control voltage can be applied to the at least one actuator 5 of the first partial segment 9 and a second time-varying electrical control voltage can be applied to the at least one actuator 5 of the second partial segment 10, the first time-varying control voltage and the second time-varying control voltage exhibiting the phase shift with respect to each other. The actuators 5 are electrically connected to electrical control lines 11 of the micromirror device 1 to apply the control voltages to the actuators 5 via the electrical control lines 11. The micromirror device 1 may include or be electrically connected to an electronic control unit 20 to apply the control voltages to the actuators 5 with the electronic control unit 20.

Fig. 2 shows a schematic illustration of a further micromirror device 1, which comprises a mirror 3, in a perspective view. The micromirror device 1, especially the mirror 3, can be implemented as shown in Fig. 1, in particular with corresponding features. The mirror 3 has a dynamic deformation compensator 2 formed with two piezoelectric actuators 5, wherein one of the actuators 5 is formed as part of the first partial segment 9 of the mirror 3 and the other actuator 5 is formed as part of the second partial segment 10 of the mirror 3. Expediently, the mirror 3 may be connected to torsion elements 12 of the micromirror device 1 on opposite sides of the mirror 3 to controllably pivotally mount the mirror 3. The torsion elements 12 define the rotation axis R. The piezoelectric actuator 5 of the respective partial segment 8 defines a deformation region 6 which, in top view of the reflection surface 4 of the mirror 3, has a shape formed with a plurality of tines 13, the tines 13 being arranged in a row in a direction parallel to the rotation axis R and being tapered in a respective alignment direction A of the partial segment 8, which alignment direction A faces away from the rotation axis R and is oriented orthogonally to the rotation axis R. In Fig. 3, the mirror 3 of Fig. 2 is schematically shown in a top view of the reflection surface 4 of the mirror 3. Preferably, a majority of the tines 13 of the shape of the respective deformation region 6 each have a width which decreases along the alignment direction A according to a cubic function. Typically, the shape of the respective deformation region 6 has a tine basis 14 from which the tines 13 project in the respective alignment direction A. Usually, in top view of the reflection surface 4, the deformation regions 6 of the partial segments 8 are shaped mirror-symmetrically to each other with respect to the rotation axis R.

The above explanations regarding the figures apply in particular to actuators 5 and deformation regions 6 of the dynamic deformation compensator 2. It has proven advantageous if the mirror 3 comprises a static deformation compensator 15, wherein the static deformation compensator 15 comprises at least one piezoelectric actuator 5, which actuator 5 defines a deformation region 23 of the mirror 3 to statically elastically deform the deformation region 23 with application of a static control signal to the actuator 5. In this way, a static elastic deformation of the mirror 3 can be compensated at least partially, in particular completely. In top view of the reflection surface 4 of the mirror 3, the at least one deformation region 23 of the static deformation compensator 15 can be arranged between the at least one deformation region 6 of the dynamic deformation compensator 2 of one of the partial segments 8 and the at least one deformation region 6 of the dynamic deformation compensator 2 of the other of the partial segments 8, and in particular is formed with both partial segments 8. Preferably, in top view of the reflection surface 4, a substantially entire area of the mirror 3 which is not occupied by deformation regions 6 of the dynamic deformation compensator 2 is occupied by the deformation region 23 of the static deformation compensator 15.

Fig. 4 schematically shows the mirror 3 of the micromirror device 1 of Fig. 2 and Fig. 3 in a cross section orthogonal to the reflection surface 4 of the mirror 3 and orthogonal to the rotation axis R. The mirror basis 7 is formed with a mirror basis substrate 16 and the actuators 5. The mirror basis substrate 16, the actuators 5, and the reflection surface 4 are arranged on top of each other in a direction orthogonal to the reflection surface 4, wherein the actuators 5 are arranged between the reflection surface 4 and the mirror basis substrate 16. The reflection surface 4 is usually implemented by a reflection layer 22, comprising the reflection surface 4. The actuators 5 are each formed with two electrodes 18 and a piezoelectric layer 17 disposed between the two electrodes 18 to form the respective piezoelectric element. This may apply to the piezoelectric actuators 5 of the dynamic deformation compensator 2 and the static deformation compensator 15. A plurality of the actuators 5 may have a common piezoelectric layer 17 and/or a common electrode 18. It is practical if the electrode 18 of each of the actuators 5 that faces away from the reflection surface 4 forms the common electrode 18. The electrodes 18 of the actuators 5 that face the reflection surface 4 can be spaced apart from one another, in particular in a direction parallel to the reflection surface 4, for example by a gap between the electrodes 18. Usually, the reflection surface 4 of the mirror 3 which is applied to the actuators 5, in particular the aforementioned facing electrodes 18, also exhibits corresponding gaps. The mirror basis substrate 16 of the mirror 3 is formed with a layer arrangement 19, which is formed with a plurality of layers arranged on top of each other in a direction orthogonal to the reflection surface 4. The respective layer is preferably formed with, in particular substantially of, silicon, silicon dioxide and/or silicon nitride. For example, the layer arrangement 19 can comprise four or more layers, wherein layers formed with, in particular substantially of, silicon and layers formed with, in particular substantially of, silicon dioxide and/or silicon nitride are preferably arranged on top of each other alternately. In a cross section orthogonal to the rotation axis R, layers of the layer arrangement 19 of the mirror basis substrate 16 can have different widths in direction orthogonal to the rotation axis R. By this a mass moment of inertia of the mirror 3 and/or a deformability of the mirror 3 can be influenced. For example, one or more of the layers, which typically form an underside of the mirror 3 opposite the reflection surface 4, may have a width smaller than an average width of the rest of the mirror 3. These layers can then provide backside reinforcement to the mirror 3. The widths are usually measured in the cross section orthogonal to the rotation axis R in a direction orthogonal to the rotation axis R.

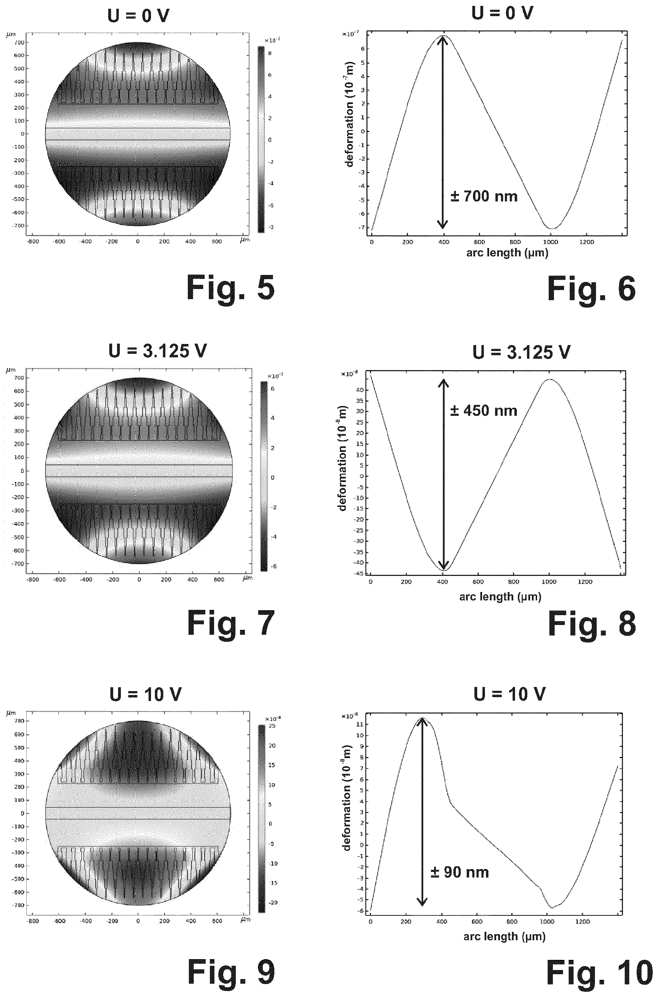

Fig. 5 to Fig. 10 show exemplarily a deformation, in particular a dynamic deformation, of the mirror 3 of the micromirror device 1 of Fig. 2 to Fig. 4 at different electrical control voltages applied to the dynamic deformation compensator 2. Shown in each case is a mirror profile of the mirror 3 at a maximum deflection of the mirror 3 about the rotation axis R. Fig. 5, Fig. 7 and Fig. 9 show representations of a deformation of the mirror 3 in a top view of the reflection surface 4 of the mirror 3, where a deformation is represented by different gray values. Fig. 6, Fig. 8 and Fig. 10 show corresponding graphs which depict a deformation of the mirror 3, in particular of the reflection surface 4 of the mirror 3, in a cross section orthogonal to the reflection surface 4 and orthogonal to the rotation axis R passing through a center of the mirror 3, wherein a deformation (in 10⁻⁷·m or 10⁻⁸·m) of the mirror 3 over an arc length (in µm) of an extension of the mirror 3 is shown. For the exemplary implementation shown, in top view of the mirror surface 4, the mirror 3 was circular, with the mirror 3 having a diameter of 1400 µm. The mirror 3 was implemented with a thickness of 10 µm. The mirror 3 may analogously have a shape and/or size, in particular diameter and/or thickness, as indicated in this document.

Fig. 5 and Fig. 6 refer to a deformation of the mirror 3 when an electrical control voltage applied to the dynamic deformation compensator 2, in particular its actuators 5, has an electrical voltage U of 0 V. This corresponds to a state of the mirror 3 in which there is no compensation of a dynamic deformation of the mirror 3 with the dynamic deformation compensator 2. A spectrum of the deformation extends over a range of ± 700 nm. Fig. 7 and Fig. 8 refer to a deformation of the mirror 3 when an electrical control voltage applied to the dynamic deformation compensator 2, in particular its actuators 5, has an amplitude U of 3.125 V. This corresponds to a state of the mirror 3 in which with the actuators 5 of the dynamic deformation compensator 2 the respective deformation regions 6 are elastically deformed to at least partially compensate a dynamic deformation of the mirror 3. A spectrum of the deformation extends over a range of ± 450 nm. Compared to the deformation of the mirror 3 without compensation of dynamic deformation, as shown in Fig. 5 and Fig. 6, a large reduction of dynamic deformation is achieved. Fig. 9 and Fig. 10 refer to a deformation of the mirror 3 when an electrical control voltage applied to the dynamic deformation compensator 2, in particular its actuators 5, has an amplitude U of 10 V. A spectrum of the deformation extends over a range of ± 90 nm. Compared to the deformation of the mirror 3 without a compensation of dynamic deformation, as shown in Fig. 5 and Fig. 6, a very large reduction of dynamic deformation is achieved.

## Claims

1. Micromirror device (1) comprising a mirror (3) and a holder, which mirror (3) is mounted controllably pivotable about a rotation axis (R), wherein the mirror (3) and the holder are connected to each other by one or more torsion elements (12) of the micromirror device (1), wherein the torsion elements (12) define the rotation axis (R), wherein the micromirror device (1) has a drive system which is designed to pivot the mirror (3) in a controlled manner about the rotation axis (R), **characterized in that** the mirror (3) comprises a dynamic deformation compensator (2), which is formed with at least one actuator (5) for elastic deformation of the mirror (3) in order to at least partially, preferably completely, compensate a dynamic deformation of the mirror (3) with control of the actuator (5).

2. Micromirror device (1) according to claim 1, wherein the at least one actuator (5) defines a deformation region (6) of the mirror (3), wherein with application of a time-varying control signal to the actuator (5) the deformation region (6) is time-varyingly elastically deformable in order to at least partially, preferably completely, compensate a dynamic deformation of the mirror (3) with control of the actuator (5).

3. Micromirror device (1) according to claim 1 or 2, wherein the actuator (5) is a piezoelectric actuator.

4. Micromirror device (1) according to any one of claims 1 to 3, wherein the dynamic deformation compensator (2) comprises a plurality of actuators (5), wherein, in top view of a reflection surface (4) of the mirror (3), both partial segments (8) of the mirror (3) defined by the rotation axis (R) each comprise at least one deformation region (6) of the actuators (5).

5. Micromirror device (1) according to claim 4, wherein, in top view of the reflection surface (4), at least one deformation region (6) of the first partial segment (9) and at least one deformation region (6) of the second partial segment (10) are arranged and/or shaped symmetrically, in particular mirror-symmetrically, relative to each other with respect to the rotation axis (R).

6. Micromirror device (1) according to claim 4 or 5, wherein actuators (5) of the dynamic deformation compensator (2), whose deformation regions (6) are formed with different partial segments (8), can be controlled with a phase shift, preferably of 180°, relative to each other.

7. Micromirror device (1) according to any one of claims 4 to 6, wherein, in top view of a reflection surface (4) of the mirror (3), an area occupancy of the respective partial segment (8) with the at least one deformation region (6) decreases in an alignment direction (A) of the respective partial segment, which alignment direction (A) faces away from the rotation axis (R) and is oriented orthogonally to the rotation axis (R), wherein preferably the decrease occurs according to a cubic function.

8. Micromirror device (1) according to any one of claims 4 to 7, wherein, in top view of the reflecting surface (4) of the mirror (3), the at least one deformation region (6) of the respective partial segment (8) has a shape formed with a plurality of tines (13), wherein the tines (13) are arranged in a row in a direction parallel to the rotation axis (R) and the tines (13) are tapered in a respective alignment direction (A) of the partial segment (8), which alignment direction (A) faces away from the rotation axis (R) and is oriented orthogonally to the rotation axis (R).

9. Micromirror device (1) according to any one of claims 1 to 8, wherein the mirror (3) comprises a static deformation compensator (15), wherein the static deformation compensator (15) comprises at least one actuator (5) which defines a deformation region (6) of the mirror (3), wherein with application of a time-constant control signal to the actuator (5) of the static deformation compensator (15) the deformation region (6) is statically elastically deformable in order to compensate a static elastic deformation of the mirror (3) at least partially, in particular completely.

10. Micromirror device (1) according to claim 9 and claim 7 or 8, wherein, in top view of the reflection surface (4) of the mirror (3), the at least one deformation region (6) of the static deformation compensator (15) is formed with portions of the mirror (3) which do not overlap with deformation regions (6) of the dynamic deformation compensator (2).

11. Method of operating a micromirror device (1), in particular a micromirror device (1) according to any one of claims 1 to 10, wherein the micromirror device (1) comprises a mirror (3) and a holder, which mirror (3) is mounted controllably pivotable about a rotation axis (R), wherein the mirror (3) and the holder are connected to each other by one or more torsion elements (12) of the micromirror device (1), wherein the torsion elements (12) define the rotation axis (R), wherein the micromirror device (1) has a drive system which pivots the mirror (3) in a controlled manner about the rotation axis (R), **characterized in that** the mirror (3) comprises a dynamic deformation compensator (2) which is formed with at least one actuator (5) for elastic deformation of the mirror (3), wherein with control of the actuator (5) a dynamic deformation of the mirror (3) is compensated at least partially, preferably entirely.

12. Method according to claim 11, wherein, in top view of a reflection surface (4) of the mirror (3), both partial segments (8) of the mirror (3) defined by the rotation axis (R) each comprise at least one deformation region (6), wherein the deformation regions (6) of the different partial segments (8) are defined by different actuators (5) of the dynamic deformation compensator (2), wherein with application of a time-varying control signal to the respective actuator (5) the deformation regions (6) are time-varyingly elastically deformed.

13. Method according to claim 11 or 12, wherein the control signal is formed with a time-constant bias control signal and a time-varying dynamic control signal, which dynamic control signal is superimposed on the bias control signal.

14. Method according to claim 12 or 13, wherein an actuator (5) which defines a deformation region (6) of one of the partial segments (8) and an actuator (5) which defines a deformation region (6) of the other partial segment (8) are controlled with control signals which have a phase shift, preferably of 180°, relative to one another.

## Patentansprüche

1. Mikrospiegelvorrichtung (1), einen Spiegel (3) und eine Halterung umfassend, wobei der Spiegel (3) steuerbar drehbar um eine Rotationsachse (R) montiert ist, wobei der Spiegel (3) und die Halterung durch ein oder mehrere Torsionselemente (12) der Mikrospiegelvorrichtung (1) miteinander verbunden sind, wobei die Torsionselemente (12) die Rotationsachse (R) definieren, wobei die Mikrospiegelvorrichtung (1) ein Antriebssystem aufweist, das dafür gestaltet ist, den Spiegel (3) in einer gesteuerten Weise um die Rotationsachse (R) zu drehen, **dadurch gekennzeichnet, dass** der Spiegel (3) einen Kompensator (2) dynamischer Verformung umfasst, der mit mindestens einem Betätigungselement (5) zum elastischen Verformen des Spiegels (3) gebildet ist, um eine dynamische Verformung des Spiegels (3) unter Steuerung des Betätigungselements (5) zumindest teilweise, vorzugsweise vollständig zu kompensieren.

2. Mikrospiegelvorrichtung (1) nach Anspruch 1, wobei das mindestens eine Betätigungselement (5) eine Verformungsregion (6) des Spiegels (3) definiert, wobei die Verformungsregion (6) bei Anlegen eines zeitlich variierenden Steuersignals an dem Betätigungselement (5) zeitlich variierend elastisch verformbar ist, um eine dynamische Verformung des Spiegels (3) unter Steuerung des Betätigungselements (5) zumindest teilweise, vorzugsweise vollständig, zu kompensieren.

3. Mikrospiegelvorrichtung (1) nach Anspruch 1 oder 2, wobei das Betätigungselement (5) ein piezoelektrisches Betätigungselement ist.

4. Mikrospiegelvorrichtung (1) nach einem der Ansprüche 1 bis 3, wobei der Kompensator (2) dynamischer Verformung mehrere Betätigungselemente (5) umfasst, wobei in der Draufsicht auf eine Reflexionsfläche (4) des Spiegels (3) beide Teilsegmente (8) des Spiegels (3), die durch die Rotationsachse (R) definiert sind, jeweils mindestens eine Verformungsregion (6) der Betätigungselemente (5) umfassen.

5. Mikrospiegelvorrichtung (1) nach Anspruch 4, wobei in der Draufsicht auf die Reflexionsfläche (4) mindestens eine Verformungsregion (6) des ersten Teilsegments (9) und mindestens eine Verformungsregion (6) des zweiten Teilsegments (10) symmetrisch, insbesondere spiegelsymmetrisch, relativ zueinander in Bezug auf die Rotationsachse (R) angeordnet und/oder geformt sind.

6. Mikrospiegelvorrichtung (1) nach Anspruch 4 oder 5, wobei Betätigungselemente (5) des Kompensators (2) dynamischer Verformung, deren Verformungsregionen (6) mit verschiedenen Teilsegmenten (8) gebildet sind, mit einer Phasenverschiebung von vorzugsweise 180° relativ zueinander gesteuert werden können.

7. Mikrospiegelvorrichtung (1) nach einem der Ansprüche 4 bis 6, wobei in der Draufsicht auf eine Reflexionsfläche (4) des Spiegels (3) eine Flächenbelegung des jeweiligen Teilsegments (8) mit der mindestens einen Verformungsregion (6) in einer Abstimmungsrichtung (A) des jeweiligen Teilsegments abnimmt, wobei die Abstimmungsrichtung (A) von der Rotationsachse (R) weg weist und rechtwinklig zur Rotationsachse (R) ausgerichtet ist, wobei die Abnahme vorzugsweise gemäß einer kubischen Funktion erfolgt.

8. Mikrospiegelvorrichtung (1) nach einem der Ansprüche 4 bis 7, wobei in der Draufsicht auf die Reflexionsfläche (4) des Spiegels (3) die mindestens eine Verformungsregion (6) des jeweiligen Teilsegments (8) eine Form aufweist, die mit mehreren Zacken (13) gebildet ist, wobei die Zacken (13) in einer Richtung parallel zur Rotationsachse (R) in einer Reihe angeordnet sind und sich die Zacken (13) in einer jeweiligen Abstimmungsrichtung (A) des Teilsegments (8) verjüngen, wobei die Abstimmungsrichtung (A) von der Rotationsachse (R) weg weist und rechtwinklig zur Rotationsachse (R) ausgerichtet ist.

9. Mikrospiegelvorrichtung (1) nach einem der Ansprüche 1 bis 8, wobei der Spiegel (3) einen Kompensator (15) statischer Verformung umfasst, wobei der Kompensator (15) statischer Verformung mindestens ein Betätigungselement (5) umfasst, das eine Verformungsregion (6) des Spiegels (3) definiert, wobei die Verformungsregion (6) bei Anlegen eines zeitlich konstanten Steuersignals an dem Betätigungselement (5) des Kompensators (15) statischer Verformung statisch elastisch verformbar ist, um eine statische elastische Verformung des Spiegels (3) zumindest teilweise, insbesondere vollständig, zu kompensieren.

10. Mikrospiegelvorrichtung (1) nach Anspruch 9 und Anspruch 7 oder 8, wobei in der Draufsicht auf die Reflexionsfläche (4) des Spiegels (3) die mindestens eine Verformungsregion (6) des Kompensators (15) statischer Verformung mit Abschnitten des Spiegels (3) gebildet ist, welche die Verformungsregionen (6) des Kompensators (2) dynamischer Verformung nicht überlappen.

11. Verfahren zum Betreiben einer Mikrospiegelvorrichtung (1), insbesondere einer Mikrospiegelvorrichtung (1) nach einem der Ansprüche 1 bis 10, wobei die Mikrospiegelvorrichtung (1) einen Spiegel (3) und eine Halterung umfasst, wobei der Spiegel (3) steuerbar drehbar um eine Rotationsachse (R) montiert ist, wobei der Spiegel (3) und die Halterung durch ein oder mehrere Torsionselemente (12) der Mikrospiegelvorrichtung (1) miteinander verbunden sind, wobei die Torsionselemente (12) die Rotationsachse (R) definieren, wobei die Mikrospiegelvorrichtung (1) ein Antriebssystem aufweist, das den Spiegel (3) in einer gesteuerten Weise um die Rotationsachse (R) dreht, **dadurch gekennzeichnet, dass** der Spiegel (3) einen Kompensator (2) dynamischer Verformung umfasst, der mit mindestens einem Betätigungselement (5) zum elastischen Verformen des Spiegels (3) gebildet ist, wobei unter Steuerung des Betätigungselements (5) eine dynamische Verformung des Spiegels (3) zumindest teilweise, vorzugsweise gänzlich, kompensiert wird.

12. Verfahren nach Anspruch 11, wobei in der Draufsicht auf eine Reflexionsfläche (4) des Spiegels (3) beide Teilsegmente (8) des Spiegels (3), die durch die Rotationsachse (R) definiert sind, jeweils mindestens eine Verformungsregion (6) umfassen, wobei die Verformungsregionen (6) der verschiedenen Teilsegmente (8) durch verschiedene Betätigungselemente (5) des Kompensators (2) dynamischer Verformung definiert werden, wobei die Verformungsregionen (6) bei Anlegen eines zeitlich variierenden Steuersignals an das jeweilige Betätigungselement (5) zeitlich variierend elastisch verformt werden.

13. Verfahren nach Anspruch 11 oder 12, wobei das Steuersignal mit einem zeitlich konstanten Vorspannungssteuersignal und einem zeitlich variierenden dynamischen Steuersignal gebildet wird, wobei das dynamische Steuersignal auf das Vorspannungssteuersignal aufgeblendet wird.

14. Verfahren nach Anspruch 12 oder 13, wobei ein Betätigungselement (5), das eine Verformungsregion (6) eines der Teilsegmente (8) definiert, und ein Betätigungselement (5), das eine Verformungsregion (6) des anderen Teilsegments (8) definiert, mit Steuersignalen gesteuert werden, die eine Phasenverschiebung von vorzugsweise 180° relativ zueinander aufweisen.

## Revendications

1. Dispositif à micromiroir (1) comprenant un miroir (3) et un support, lequel miroir (3) est monté de manière à pouvoir pivoter et de manière réglable autour d'un axe de rotation (R), le miroir (3) et le support étant reliés l'un à l'autre par un ou plusieurs éléments de torsion (12) du dispositif à micromiroir (1), les éléments de torsion (12) définissant l'axe de rotation (R), le dispositif à micromiroir (1) présentant un système d'entraînement qui est conçu pour faire pivoter le miroir (3) de manière contrôlée autour de l'axe de rotation (R), **caractérisé en ce que** le miroir (3) présente un compensateur de déformation dynamique (2) qui est con en formé avec au moins un actionneur (5) pour la déformation élastique du miroir (3) afin de compenser au moins partiellement, de préférence complètement, une déformation dynamique du miroir (3) avec commande de l'actionneur (5).

2. Dispositif à micromiroir (1) selon la revendication 1, dans lequel l'au moins un actionneur (5) définit une zone de déformation (6) du miroir (3), la zone de déformation (6) étant déformable élastiquement de manière variable dans le temps lors de l'application d'un signal de commande variable dans le temps à l'actionneur (5) afin de compenser au moins partiellement, de préférence complètement, une déformation dynamique du miroir (3) lors de la commande de l'actionneur (5).

3. Dispositif à micromiroir (1) selon la revendication 1 ou 2, dans lequel l'actionneur (5) est un actionneur piézoélectrique.

4. Dispositif à micromiroir (1) selon l'une des revendications 1 à 3, dans lequel le compensateur de déformation dynamique (2) comprend plusieurs actionneurs (5), les deux segments partiels (8) du miroir (3) définis par l'axe de rotation (R) présentant chacun au moins une zone de déformation (6) des actionneurs (5) en vue de dessus d'une surface réfléchissante (4) du miroir (3).

5. Dispositif à micromiroir (1) selon la revendication 4, dans lequel au moins une zone de déformation (6) du premier segment partiel (9) et au moins une zone de déformation (6) du second segment partiel (10) sont disposées et/ou conformées symétriquement, en particulier symétriquement en symétrie miroir par rapport à l'axe de rotation (R) en vue de dessus de la surface réfléchissante (4).

6. Dispositif à micromiroir (1) selon la revendication 4 ou 5, dans lequel des actionneurs (5) du compensateur de déformation dynamique (2), dont les zones de déformation (6) sont conformées avec des segments partiels différents (8), peuvent être commandés avec un déphasage, de préférence de 180°, les uns par rapport aux autres.

7. Dispositif à micromiroir (1) selon l'une des revendications 4 à 6, dans lequel, en vue de dessus d'une surface réfléchissante (4) du miroir (3), une occupation de surface du segment partiel respectif (8) avec l'au moins une zone de déformation (6) diminue dans une direction d'alignement (A) du segment partiel respectif, la direction d'alignement (A) étant opposée à l'axe de rotation (R) et orientée orthogonalement à l'axe de rotation (R), la diminution se produisant de préférence selon une fonction cubique.

8. Dispositif à micromiroir (1) selon l'une quelconque des revendications 4 à 7, dans lequel, en vue de dessus de la surface réfléchissante (4) du miroir (3), l'au moins une zone de déformation (6) du segment partiel respectif (8) présente une forme conformée avec plusieurs dents (13), les dents (13) étant disposées en rangée dans une direction parallèle à l'axe de rotation (R) et les dents (13) étant effilées dans une direction d'alignement respective (A) du segment partiel (8), cette direction d'alignement (A) étant opposée à l'axe de rotation (R) et orientée perpendiculairement à l'axe de rotation (R).

9. Dispositif à micromiroir (1) selon l'une quelconque des revendications 1 à 8, dans lequel le miroir (3) comprend un compensateur de déformation statique (15), le compensateur de déformation statique (15) comprenant au moins un actionneur (5) qui définit une zone de déformation (6) du miroir (3), la zone de déformation (6) pouvant être déformée élastiquement de manière statique lors de l'application d'un signal de commande constant dans le temps à l'actionneur (5) du compensateur de déformation statique (15) afin de compenser au moins partiellement, en particulier complètement, une déformation élastique statique du miroir (3).

10. Dispositif à micromiroir (1) selon la revendication 9 et la revendication 7 ou 8, dans lequel, en vue de dessus de la surface réfléchissante (4) du miroir (3), l'au moins une zone de déformation (6) du compensateur de déformation statique (15) est conformée avec des parties du miroir (3) qui ne chevauchent pas les zones de déformation (6) du compensateur de déformation dynamique (2).

11. Procédé pour faire fonctionner un dispositif à micromiroir (1), en particulier un dispositif à micromiroir (1) selon l'une des revendications 1 à 10, le dispositif à micromiroir (1) comprenant un miroir (3) et un support, lequel miroir (3) est monté de manière à pouvoir pivoter et de manière réglable autour d'un axe de rotation (R), le miroir (3) et le support étant reliés entre eux par un ou plusieurs éléments de rotation (12) du dispositif à micromiroir (1), les éléments de torsion (12) définissant l'axe de rotation (R), le dispositif à micromiroir (1) présentant un système d'entraînement qui fait pivoter le miroir (3) de manière commandée autour de l'axe de rotation (R), **caractérisé en ce que** le miroir (3) comprend un compensateur de déformation dynamique (2) qui est conformé avec au moins un actionneur (5) pour la déformation élastique du miroir (3), une déformation dynamique du miroir (3) étant compensée au moins partiellement, de préférence entièrement, par la commande de l'actionneur (5).

12. Procédé selon la revendication 11, dans lequel les deux segments partiels (8) du miroir (3) définis par l'axe de rotation (R) présentent chacun, en vue de dessus d'une surface réfléchissante (4) du miroir (3), au moins une zone de déformation (6), les zones de déformation (6) des différents segments partiels (8) étant définies par différents actionneurs (5) du compensateur de déformation dynamique (2), les zones de déformation (6) étant déformées élastiquement de manière variable dans le temps par l'application d'un signal de commande variable dans le temps à l'actionneur respectif une voiture qui arrive (5).

13. Procédé selon la revendication 11 ou 12, dans lequel le signal de commande est conformé avec un signal de commande de polarisation constant dans le temps et un signal de commande dynamique variant dans le temps, lequel signal de commande dynamique est superposé au signal de commande de polarisation.

14. Procédé selon la revendication 12 ou 13, dans lequel un actionneur (5) définissant une zone de déformation (6) de l'un des segments partiels (8) et un actionneur (5) définissant une zone de déformation (6) de l'autre segment partiel (8) sont commandés par des signaux de commande qui présentent un déphasage, de préférence de 180°, l'un par rapport à l'autre.
